# EUROPÄISCHE PATENTSCHRIFT

(11) **EP 3 322 651 B1**
(45) Veröffentlichungstag und Bekanntmachung des Hinweises auf die Patenterteilung: **03.07.2019**
(21) Anmeldenummer: 16740992.9
(22) Anmeldetag: 13.07.2016
(51) Int. Cl.: B65D 85/804

(54) **FILTERELEMENT MIT EINER AUSNEHMUNG**
FILTER ELEMENT HAVING A CUT-OUT
ÉLÉMENT FILTRANT COMPRENANT UN ÉVIDEMENT

(30) Priorität: 13.07.2015 DE 102015111319
(43) Veröffentlichungstag der Anmeldung: 23.05.2018
(73) Patentinhaber: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner
(86) Internationale Anmeldenummer: PCT/EP2016/066617
(87) Internationale Veröffentlichungsnummer: WO 2017/009369

(56) Entgegenhaltungen:
- EP-A1- 0 224 297
- WO-A1-01/60712
- WO-A1-2012/080928
- WO-A1-2012/135204
- WO-A1-2013/189555
- US-A1- 2007 148 290
- US-A1- 2011 303 095

## Beschreibung

Die vorliegende Erfindung betrifft eine Portionskapsel zur Herstellung eines Getränks aufweisend einen Kapselkörper mit einem Kapselboden, einer Seitenwand und einem Kragenrand sowie einem Deckel, wobei zwischen dem Kapselboden und dem Deckel ein Hohlraum zur Aufnahme eines pulverförmigen, granulatförmigen, blattschnittförmigen oder flüssigen Getränkesubstrats ausgebildet ist und wobei in dem Hohlraum ein Filterelement angeordnet ist und das Filterelement aus einem Fasermaterial gefertigt ist. Des Weiteren betrifft die vorliegende Erfindung ein Verfahren zur Herstellung einer Portionskapsel.

Solche Portionskapseln sind aus dem Stand der Technik beispielsweise der WO 2012/038063 allgemein bekannt und werden beispielsweise zur Herstellung von Tee- oder Kaffeegetränken in Brühautomaten eingesetzt. Dafür wird von einer Pumpe Wasser durch die Portionskapsel gedrückt und dabei eine Getränkesubstanz gelöst und/oder extrahiert. Die aus dem Stand der Technik bekannten Portionskapseln haben jedoch den Nachteil, dass sie, insbesondere das Filterelement, einen vergleichsweise hohen Druckverlust haben, d.h., dass der Überdruck, der von der Pumpe des Brühautomaten zur Verfügung gestellt werden muss, wesentlich größer als 2 Bar sein muss und/oder dass die Fertigung der Portionskapseln aufwändig ist und/oder dass sie ein vergleichsweise hohes Gewicht aufweisen.

Dokument US2007/148290A1 offenbart eine Kapsel gemäß dem Oberbegriff des Anspruchs 1.

Es war deshalb die Aufgabe der vorliegenden Erfindung, eine Portionskapsel mit einem Filterelement zur Verfügung zu stellen, welche einen im Vergleich zum Stand der Technik geringen Druckverlust aufweist.

Gelöst wird diese Aufgabe mit einer Portionskapsel gemäß Anspruch 1.

Die zu diesem Gegenstand der vorliegenden Erfindung gemachten Ausführungen gelten für die anderen Gegenstände der vorliegenden Erfindung gleichermaßen und umgekehrt.

Die erfindungsgemäße Portionskapsel hat den Vorteil, dass sie vergleichsweise einfach zu fertigen ist, eine große Filterfläche mit einem geringen Druckverlust und ein vergleichsweise geringes Gewicht aufweist.

Die Portionskapsel im Sinne der vorliegenden Erfindung umfasst eine vorzugsweise hermetisch dichte Portionskapsel. Dies bedeutet, dass das in der Portionskapsel befindliche Getränke- oder Lebensmittelsubstrat, beispielsweise Kaffeepulver, Suppenpulver oder Tee, vor dem Extraktions- und/oder Lösevorgang im Wesentlichen aromadicht gegenüber der Umwelt verschlossen ist. Die Portionskapsel muss aber nicht hermetisch dicht sein, sondern kann auch, vor deren Verwendung in einer hermetisch dichten Verpackung vorgesehen sein, die dann, beispielsweise manuell geöffnet wird. Solche Portionskapseln sind in der Regel an mindestens einer, vorzugsweise zwei Seiten geöffnet, d.h. von der Zubereitungsflüssigkeit durchströmbar, ohne dass sie angestochen wird.

Die Portionskapseln zur Herstellung eines Getränkes oder eines Lebensmittels sind bevorzugt kegelstumpfförmig oder zylindrisch geformt und werden beispielsweise aus einer tiefgezogenen Kunststofffolie oder im Kunststoffspritzverfahren hergestellt. Sie haben üblicherweise einen geschlossenen Kapselboden und eine offene Einfüllseite mit einem Kragenrand, auf den, nachdem der Hohlraum der Portionskapsel mit einem Filterelement versehen und mit einem granulierten und/oder blattförmigen und/oder blattschnittförmigen und/oder pulverförmigen und/oder flüssigen Getränkesubstrat befüllt worden ist, eine Deckelfolie aufgesiegelt oder aufgeklebt wird.

Zwischen dem Kapselboden und Getränkesubstrat ist ein Filterelement vorgesehen, das verhindert, dass das Getränkesubstrat in das fertiggestellte Getränk oder Lebensmittel gelangt. Dieses Filterelement ist aus Fasern hergestellt und weist nun erfindungsgemäß eine Ausnehmung auf, in der kein filterndes Material vorgesehen ist. Vorzugsweise weist diese Ausnehmung einen Außendurchmesser von 3 - 15 mm auf. Vorzugsweise beträgt der Außendurchmesser der Ausnehmung 5 - 40% des freien Innendurchmessers des Kapselkörpers im Bereich des Kapselbodens. Durch die Ausnehmung wird Gewicht eingespart. Die Ausnehmung kann zur Ausrichtung des Filterelements relativ zu dem Kapselkörper eingesetzt werden. Die Ausnehmung des Filterelements ist vorzugsweise im Bereich des Bodens der Portionskapsel vorgesehen und der Randbereich der Ausnehmung ist vorzugsweise mit dem Boden des Kapselkörpers verbunden. Vorzugsweise befindet sich die Ausnehmung im Bereich der Mitte des Filterelements. Vorzugsweise ist das Filterelement zumindest im Wesentlichen rotationssymmetrisch vorgesehen. Besonders bevorzugt befindet sich die Ausnehmung um die Symmetrieachse herum, besonders bevorzugt rotationssymmetrisch um die Symmetrieachse herum. Vorzugsweise ist die Ausnehmung kreisförmig ausgebildet.

Gemäß einem weiteren erfindungsgemäßen oder bevorzugten Gegenstand der vorliegenden Erfindung ist das Filterelement an den Kapselkörper geheftet.

Die zu diesem Gegenstand der vorliegenden Erfindung gemachten Ausführungen gelten für die anderen Gegenstände der vorliegenden Erfindung gleichermaßen und umgekehrt.

Geheftet im Sinne der hiesigen Erfindung bedeutet, dass das Filterelement mit dem Kapselkörper verbunden ist, diese Verbindung jedoch nur punkt- und/oder abschnittsweise, bezogen auf den Umfang des Filterelements, erfolgt, so dass diese Verbindung keine flüssigkeitsdichtende Wirkung hat, im Gegenteil kann Flüssigkeit zwischen zwei Heftstellen hindurchströmen. Beispielsweise ist das Filterelement entlang eines Kreisrings nur an einigen Stellen mit dem Kapselkörper und nicht durchgehend verbunden. Diese Ausführungsform der vorliegenden Erfindung hat den Vorteil, dass insbesondere bei großen oder in dem Kapselkörper hängenden Filterelementen, dem Filterelement eine bestimmte Form gegebenen werden kann, mit der beispielsweise verhindert wird, dass das Filterelement mit einem Aufstechorgan in Kontakt kommt. Außerdem kann der Druckverlust des Filterelements mit der Heftung vermindert und/oder die Filterfläche vergrößert werden. Mit der Heftung kann das Filterelement gespannt werden. Die Heftung wird vorzugsweise mit einer Siegelung, vorzugsweise mit Ultraschall durchgeführt.

Das Filterelement wird zwischen dem Getränkesubstrat und dem Kapselboden und/oder der Seitenwand des Kapselkörpers angeordnet und weist vorzugsweise ein erstes und ein zweites Ende auf, die besonders bevorzugt voneinander beabstandet sind. insbesondere durch die Seitenwand des Filterelements voneinander getrennt sind. Im Bereich des einen Endes strömt das Wasser in das Filterelement ein. Vorzugsweise weist das Filterelement eine Seitenwand auf, durch die das fertiggestellte Getränk zumindest teilweise abläuft. Vorzugsweise verläuft diese Seitenwand des Filterelements zumindest abschnittsweise parallel zu der Seitenwand des Kapselkörpers. Die Seitenwand des Filterelements kann an der Seitenwand des Kapselkörpers anliegen. Vorzugsweise ist die Seitenwand kegelstumpfförmig oder weist einen kegelstumpfförmigen Abschnitt auf oder ist parabelförmig vorgesehen. Vorzugsweise ist das Filterelement mit dem anderen Ende mit dem Boden des Kapselkörpers verbunden. Besonders bevorzugt weist das Filterelement einen Randbereich auf, der sich besonders bevorzugt kreisringartig an das erste Ende des Filterelements anschließt. Die Seitenwand ist in einem Winkel zu dem Randbereich vorgesehen. Vorzugsweise weist die Seitenwand und/oder der Randbereich Falten auf und/oder das Filterelement ist tiefgezogen, d.h. es wird aus einem planen Halbzeug unter Anwendung von Druck und/oder Temperatur in ein dreidimensionales Gebilde geformt. Beim Tiefziehen ändert sich vorzugsweise die Materialstärke innerhalb des Filterelements und/oder die Anordnung der Fasern ändert sich. An die Seitenwand des Filterelements schließt sich im Bodenbereich des Kapselkörpers ein Zentralbereich an, der vorzugweise zumindest abschnittsweise parallel zu dem Boden des Kapselkörpers verläuft und/oder sich im Bereich der Rotationsachse des Filterelements befindet. In dem Zentralbereich befindet sich vorzugsweise die Ausnehmung des Filterelements. Dieser Zentralbereich ist vorzugsweise mit dem Boden des Kapselkörpers verbunden.

Vorzugsweise wird die Seitenwand des Filterelements beim Befestigen am Kapselboden gespannt.

Das Filterelement ist im Bereich seines ersten Endes mit dem Kapselkörper verbunden. Diese Verbindung erfolgt vorzugsweise stoffschlüssig, insbesondere durch Schweißen, vorzugsweise durch Ultraschallschweißen. Die Verbindung kann im Bereich des Kragenrands und/oder im Bereich der Seitenwand der Portionskapsel erfolgen. Vorzugsweise ist das Filterelement auch im Bereich seines zweiten Endes mit dem Kapselkörper, insbesondere mit der Innenseite des Kapselbodens verbunden. Vorzugsweise ist mindestens eine Verbindung kreisringförmig vorgesehen. Vorzugsweise ist mindestens eine, besonders bevorzugt beide Verbindung(en) wasserundurchlässig.

Vorzugsweise hat die kreis- oder kreisringförmige Siegelung im Bodenbereich der Portionskapsel einen Außendurchmesser von 16 - 18 mm. Vorzugsweise beträgt der Außendurchmesser der Siegelung 5 - 45% des freien Innendurchmessers des Kapselkörpers im Bereich des Kapselbodens. Vorzugsweise beträgt die Breite der Siegelnaht 0,5 - 2 mm.

Vorzugsweise beträgt die Filterfläche zwischen 1100 und 20500 mm², besonders bevorzugt zwischen 2000 und 10000 mm² und ganz besonders bevorzugt zwischen 6100 und 6900 mm²
Erfindungsgemäß ist das Ende des Filterelements, das mit der Innenseite des Kapselbodens verbunden ist, gebördelt. Diese Bördelung kann durch Erwärmung und anschließendes Umformen und/oder durch eine elastische Verformung erfolgen, die dann durch eine Siegelung in ihrer Form stabilisiert wird.

Vorzugsweise ist die Seitenwand des Filterelements gespannt. Dadurch erhält das Filterelement, insbesondere dessen Wandbereich eine bestimmte Form, die sich vorteilhaft auf den Durchfluss des Wassers durch den Filter auswirkt und/oder verhindert, dass das Filterelement von einem Anstechorgan, insbesondere im Bereich des Kapselbodens durchstochen wird.

Das Filterelement ist vorzugsweise aus einem nicht gewebten Fasermaterial, beispielsweise einem Vlies und/oder Filz hergestellt und verhindert, dass Partikel des Getränkesubstrats in das herzustellende Getränk gelangt. Das Filterelement kann mehrlagig vorgesehen sein, wobei die Lagen vorzugsweise miteinander verbunden sind, beispielsweise durch kalandrieren. Vorzugsweise ist ein Bestandteil des Filterelements Papier und/oder Kunststoff und/oder ein natürlich vorkommendes Material und/oder ein biologisch abbaubarer Kunststoff und/oder ein Kunststoff vorzugsweise aus einem nachwachsenden Rohstoff. Bevorzugte Bestandteile der Fasern sind PE und/oder PP.

Vorzugsweise ist das Filterelement elastisch ausgebildet. Dadurch kann die Seitenwand des Filterelements gespannt werden.. Dadurch wird eine Formveränderung des Filterelements unter dem Druck der Flüssigkeit zumindest vermindert.

Für die Herstellung der erfindungsgemäßen Portionskapsel wird beispielsweise ein Kapselkörper zur Verfügung gestellt, an dessen Kragenrand oder Seitenwand der Randbereich des Filterelements oder die Seitenwand des Filterelements gesiegelt wird. Danach wird der Zentralbereich des Filterelementes an den Kapselboden gesigelt und anschließend das Getränkesubstrat in den Kapselkörper eingefüllt. Anschließend wird die Portionskapsel mit einer Deckelfolie verschlossen, die mit dem Randbereich des Filterelements und/oder mit dem Kragenrand des Kapselkörpers, insbesondere durch Siegeln, verbunden wird. Alternativ wird das Filterelement mit dem Kapselboden verbunden, mit der Getränkesubstanz gefüllt. Abschließend wird die Deckelfolie an den Randbereich des Filterelements gesiegelt und im Wesentlichen gleichzeitig der Randbereich des Filterelements mit dem Kragenrand der Portionskapsel verbunden. Dabei wird das Filterelement vorzugsweise gespannt. Gegebenenfalls überstehendes Material des Filterelements kann insbesondere nachträglich entfernt werden, beispielsweise durch Stanzen.

Für die Zubereitung eines Getränks, beispielsweise eines Kaffeegetränkes, wird die Portionskapsel in eine Brühkammer eines Zubereitungsgerätes eingebracht. Nach oder während des Schließvorganges der Brühkammer wird die Kapsel bevorzugt auf ihrer geschlossenen Bodenseite mittels eines in der Brühkammer angeordneten Öffnungsdornes vorzugsweise geöffnet, wobei der Öffnungsdorn vorzugsweise den Randbereich des Kapselbodens öffnet. Nach und/oder bei dem Abdichten der Brühkammer wird vorzugsweise die mit einer Deckelfolie verschlossene Einfüllseite der Portionskapsel mittels mindestens eines Einstechmittels geöffnet. Es gibt aber auch Portionskapseln, die bereits an mindestens einer Seite geöffnet sind, bevor sie in das Zubereitungsgerät eingeführt werden. Anschließend wird eine Zubereitungsflüssigkeit, vorzugsweise heißes Wasser, unter Druck durch die Deckelfolie in die Portionskapsel gefördert. Die Zubereitungsflüssigkeit durchströmt das Getränkesubstrat und extrahiert und/oder löst die für die Getränkeherstellung benötigten Stoffe aus dem Getränkesubstrat. Danach strömt das Getränk durch das Filterelement und von dort in den Kapselkörper, den sie durch eine Öffnung im Bodenbereich verlässt. Für die Zubereitung eines Kaffes reicht bei der erfindungsgemäßen Portionskapsel ein Pumpendruck von ca. 2 Bar oder weniger, um Wasser durch die Portionskapsel zu fördern.

Noch ein Gegenstand der vorliegenden Erfindung ist ein Verfahren zur Herstellung der erfindungsgemäßen Portionskapsel, bei dem das Filtermaterial geformt und das erste Ende und das zweite Ende mit dem Kapselkörper verbunden wird.

Die zu dem erfindungsgemäßen Verfahren gemachten Ausführungen gelten für die erfindungsgemäße Portionskapsel gleichermaßen und umgekehrt.

Vor, beim oder nach dem Formen kann eine Ausnehmung in das Filtermaterial eingebracht werden. Die Ausnehmung kann durch Entfernen von Material, beispielsweise mittels eines Schnitts erfolgen. Ein Halbzeug aus Filtermaterial kann aber auch bereits so vorgeformt sein, dass sich beim Formen des Filters ein Ausnehmung in dem Filterelement ergibt. Weiterhin alternativ kann die Ausbildung der Ausnehmung bei einem Tiefziehvorgang erfolgen.

Vorzugsweise ist das Filterelement dreidimensional vorgesehen. Beispielsweise ist es zumindest abschnittsweise kegelstumpfförmig oder parabelförmig gestaltet. Gemäß einer bevorzugten Ausführungsform der vorliegenden Erfindung wird das ursprünglich plane Filtermaterial zur Herstellung des Filterelements geformt, insbesondere gerollt und/oder gefaltet und/oder elastisch oder plastisch gestreckt.

Erfindungsgemäß wird ein Ende des Filtermaterials, insbesondere das Ende im Bereich des Bodens des Kapselkörpers, gebördelt. Vorzugsweise erstreckt sich die Bördelung um die Ausnehmung in dem Filtermaterial, insbesondere im Zentralbereich des Filterelements.

Diese Bördelung erfolgt vorzugsweise durch plastische und/oder elastische Verformung, beispielsweise unter dem Einfluss von Druck und/oder Temperatur.

Vorzugsweise wird die Bördelung mit dem Kapselboden verbunden, insbesondere durch Schweißen, besonders bevorzugt durch Ultraschallschweißen.

Vorzugsweise wird das erste Ende des Filterelement, durch dessen Öffnung das Wasser in das Filterelement strömt, mit der Seitenwand und/oder mit dem Kragenrand des Kapselkörpers verbunden, insbesondere durch Siegeln, insbesondere Heißsiegeln, oder Schweißen, besonders bevorzugt durch Ultraschallschweißen an der Seitenwand und/oder am Kragenrand.

Vorzugsweise wird das Filterelement beim Befestigen an dem Kapselkörper gespannt.

Vorzugsweise erfolgt das Anordnen der Siegelnähte zur Befestigung des Filterelements an dem Kapselkörper zumindest teilweise sequentiell.

Gemäß einer bevorzugten Ausführungsform der vorliegenden Erfindung erfolgt die Herstellung der Siegelnähte durch Ultraschallsiegelung mit mindestens einer Sonotrode. Vorzugsweise wird die Sonotrode durch eine radiale Aufweitung im Bereich der ersten Siegelnaht mit dem Filtermaterial in Verbindung gebracht. Vorzugsweise wird die Sonotrode mit dem Filtermaterial im Bodenbereich durch eine Bewegung der Sonotrode parallel zur Mittelachse des Kapselkörpers in Kontakt gebracht. Vorzugsweise wird das Filtermaterial mit der Sonotrode geformt und/oder gespannt.

Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein. Die Beschreibung gilt für alle Gegenstände der vorliegenden Erfindung gleichermaßen.
- **Figur 1**: zeigt einen Längsschnitt durch eine Portionskapsel gemäß dem Stand der Technik, die für die Zubereitung von Espresso eingerichtet ist.
- **Figur 2**: zeigt einen Längsschnitt durch eine in einer geschlossenen Brühkammer liegende Portionskapsel gemäß der Ausführungsform nach Figur 1.
- Figur 3: zeigt ein Filterelement, das nicht Teil der Erfindung ist.
- Figuren 4 und 5: zeigen jeweils eine Ausführungsform des Filterelements.
- **Figuren 6 - 9**: zeigen jeweils die erfindungsgemäße Portionskapsel.

In den verschiedenen Figuren sind gleiche Teile stets mit den gleichen Bezugszeichen versehen und werden daher in der Regel auch jeweils nur einmal benannt bzw. erwähnt.

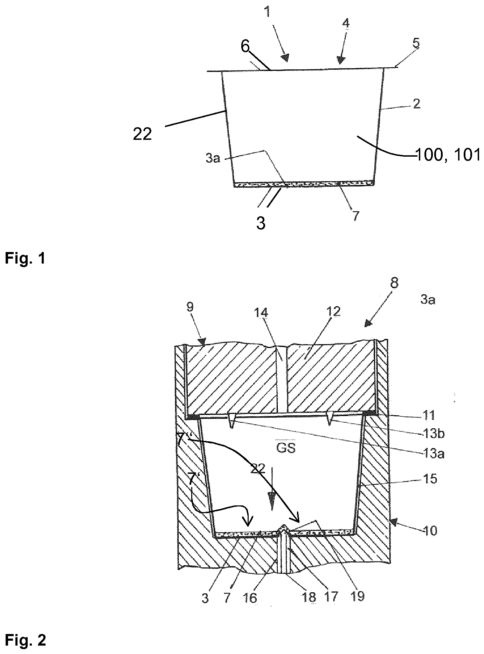

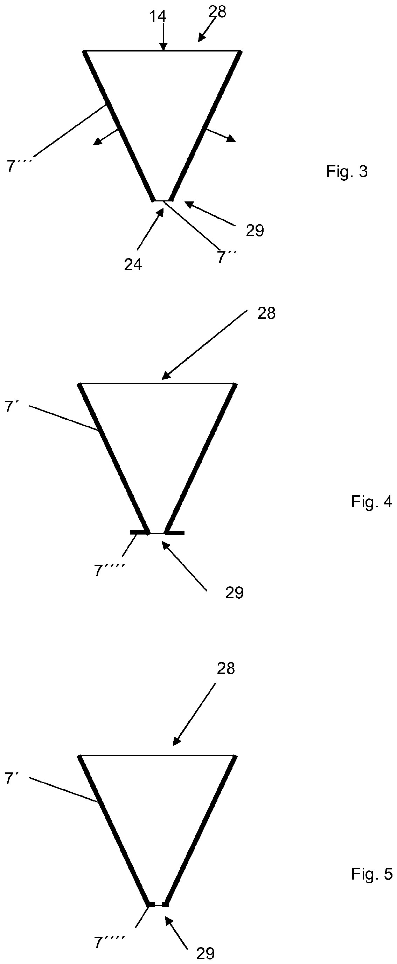

In **Figur 1** ist eine Ausführungsform einer Portionskapsel 1 gemäß dem Stand der Technik dargestellt. Die Portionskapsel 1 umfasst einen kegelstumpfförmigen Kapselkörper 2 mit einem geschlossenen Kapselboden 3 und mit einem an seiner Einfüllseite 4 angeordneten Kragenrand 5, auf den eine Deckelfolie 6 aufgeschweißt, gesiegelt oder geklebt ist. Zwischen dem Kapselboden 3 und der Deckelfolie 6 ist somit ein, vorzugsweise luft- und aromadicht verschlossener Hohlraum 100, ausgebildet, welcher mit einer pulver- und/oder granulatförmigen und/oder blattschnittförmigen Getränkesubstanz 101 gefüllt ist. Die Getränkesubstanz 101 umfasst dabei beispielsweise ein Kaffee-, Kakao-, Tee- und/oder Milchpulver (bzw. -granulat). Auf der Innenseite 3a des geschlossenen Kapselkörperbodens 3, d.h. innerhalb des Hohlraums 100, ist bevorzugt ein Filterelement 7, bestehend aus einem nicht gewebtem Fasermaterial angeordnet. Bei der erfindungsgemäßen Portionskapsel ist das Filterelement vorzugsweise nicht eben und wird anhand der **Figuren 3 - 5** erläutert.

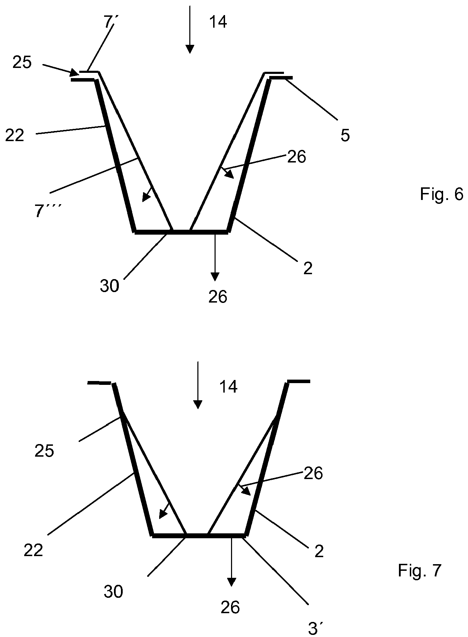

In **Figur 2** ist eine Portionskapsel 1 gemäß der in Figur 1 dargestellt, wobei die Portionskapsel 1 in der Figur 2 in einer geschlossenen Brühkammer 8 angeordnet ist. Die Brühkammer 8 besteht aus einem ersten Brühkammerelement 9 und einem zweiten Brühkammerelement 10, wobei das erste Brühkammerelement 9 zur Einführung der Portionskapsel 1 beweglich gegenüber dem zweiten Brühkammerelement 10 oder umgekehrt vorgesehen ist. Zwischen den beiden Brühkammerelementen 9, 10 ist eine Dichtung 11 angeordnet. Das erste Brühkammerelement 9 besteht im Wesentlichen aus einem Schließkolben 12 mit Einstechelementen 13a, 13b zur Öffnung der Deckelfolie 6 der Portionskapsel 1, einer Zubereitungsflüssigkeitszuführung 14 und der Dichtung 11. Das zweite Brühkammerelement 10 besteht im Wesentlichen aus einer die Portionskapsel 1 teilweise umschließenden Brühkammerglocke 15 mit einem am Boden der Brühkammerglocke 15 angeordneten Öffnungsdorn 16, der beispielsweise mit Ablaufrillen 17 versehen ist, und einem Getränkeablauf 18. Zur Aufnahme der Portionskapsel 1 befindet sich die Brühkammer 8 in einem nicht dargestellten geöffneten Zustand, in welchem das erste und das zweite Brühkammerelement 9, 10 voneinander beabstandet sind, um eine Zuführung der Portionskapsel 1 zu gewährleisten, und dem dargestellten geschlossenen Zustand, in welchem ein Zubereitungsvorgang zur Herstellung eines Getränks mittels der Portionskapsel 1 durchführbar ist. Im geschlossenen Zustand ist die Brühkammer 8 druckdicht verschlossen. Beim Überführen der Brühkammer 8 vom geöffneten Zustand in den abgebildeten geschlossenen Zustand wird die Deckelfolie 6 von den Einstechelementen 13a, 13b durchstochen, so dass Zubereitungsflüssigkeit, insbesondere heißes Brühwasser, durch die Zubereitungsflüssigkeitszuführung 14 bevorzugt unter Druck in den Hohlraum 100 der Portionskapsel 1 gelangt. Ferner wird beim Schließen der Brühkammer 8 der Kapselboden 3 von dem als Öffnungsdorn 16 ausgebildeten Perforationsmittel vorzugsweise perforiert, so dass vorzugsweise eine Ausgangsöffnung 107 in der Portionskapsel 1 erzeugt wird, durch welche die hergestellte Getränkeflüssigkeit aus der Portionskapsel 1 in Richtung des Getränkeablaufs 18 heraustreten kann. Zur Unterstützung der Ableitung der Getränkeflüssigkeit weist der Öffnungsdorn 16 auf seiner Mantelfläche hier die Ablaufrillen 17 auf. Die dargestellte Brühkammer eignet sich prinzipiell zur Herstellung eines Getränks oder Lebensmittels mit der der erfindungsgemäßen Portionskapsel, die anhand der Figuren 6 -8 beschreiben ist.

**Figur 3** zeigt ein kegelstumpfförmiges Filterelement 7, das nicht Teil der Erfindung ist. Der Fachmann versteht, dass das Filterelement jedoch auch eine andere Form aufweisen kann. Das Filterelement spannt einen Hohlraum auf, in dem das Getränkesubstrat vorgesehen wird. Das Filterelement weist ein erstes Ende 28 auf, durch das in dem vorliegenden Fall das Wasser einströmt und Inhaltsstoffe des Getränkesubstrats, das sich innerhalb des Filterelements befindet, löst und/oder extrahiert. Das fertiggestellte Getränk verlässt das Filterelement 7 insbesondere über die Seitenwand 7'" des Filterelements, strömt in den Kapselkörper und von dort durch eine Öffnung in einen Behälter, beispielsweise eine Tasse. Erfindungsgemäß weist das Filterelement an seinem zweiten Ende 29, insbesondere im Zentralbereich 7" des Filterelements eine Ausnehmung 24 auf. Diese Ausnehmung erstreckt sich vorzugsweise rotationssymmetrisch um eine Mittelachse des Filterelements. Vorzugsweise ist die Ausnehmung kreisförmig. Im Bereich der Ausnehmung befindet sich kein Filtergewebe.

**Figur 4** zeigt eine erste Ausführungsform des Filterelements 7, wobei im Wesentlichen auf die Ausführungen gemäß Figur 3 Bezug genommen werden kann. In dem vorliegendem Beispiel weist das Filterelement im Bereich seines zweiten Endes 29 eine Bördelung 7"" auf, die durch plastische und/oder elastische Verformung des Filterelements, beispielsweise unter dem Einfluss von Druck und/oder Wärme, hergestellt worden ist. Die Bördelung steht in einem Winkel von dem Filterelement, hier nach außen, ab und kann zur Befestigung des Filterelements am Boden der Portionskapsel eingesetzt werden. Außerdem stabilisiert die Bördelung die Form des Filterelements im Bereich der Ausnehmung.

**Figur 5** zeigt noch eine Ausführungsform des Filterelements, wobei auf die Ausführungen gemäß den Figuren 3 und 4 Bezug genommen wird. In dem vorliegenden Fall ist die Bördelung nach innen gerichtet und kann so mit dem Kapselboden verbunden werden.

**Figur 6** zeigt eine erste Ausführungsform der erfindungsgemäßen Portionskapsel. In dem vorliegenden Fall weist das Filterelement einen Randbereich 7' auf, der in einem Winkel im Bereich des ersten Endes 28 des Filterelements vorgesehen ist und in dem vorliegenden Fall mit dem Kragenrand 5 der Portionskapsel mittels der Siegelung 25 verbunden ist. Die Siegelung erstreckt sich vorzugsweise kreisringförmig. Das zweite Ende 29 des Filterelements wird mit dem Bodenbereich der Kapsel durch eine Siegelung, hier eine kreisringförmige Siegelung, verbunden. Die Siegelung erstreckt sich kreisringförmig um die Ausnehmung 24 des Filterelements 7. Wie durch den Pfeil 22 dargestellt, strömt die Flüssigkeit, hier Wasser, in das Filterelement und extrahiert bzw. löst die für die Getränkeherstellung notwendigen Substanzen des Getränkesubstrats. Das fertiggestellte Getränk strömt in die Portionskapsel, wie durch den Pfeil 26 dargestellt, und von dort durch den Kapselboden aus der Portionskapsel heraus. Aus der Ausnehmung 24 läuft keine Flüssigkeit heraus. Vorzugsweise ist das Filterelement gespannt.

**Figur 7** zeigt eine weitere Ausführungsform der erfindungsgemäßen Portionskapsel, wobei im Wesentlichen Figur 6 Bezug genommen werden kann. In dem vorliegenden Fall weist das Filterelement keinen Randbereich 7' auf. Die Seitenwand des Filterelements wird hier mit einer kreisringförmigen Siegelung 25 an dem Kapselkörper verbunden.

Bei beiden Ausführungsformen gemäß den Figuren 6 und 7 wird im Randbereich der Ausnehmung 24 eine Bördelung vorgesehen, die vorzugsweise mittels einer Siegelung, insbesondere einer Ultraschallsiegelung, mit dem Boden des Kapselkörpers verbunden ist. Vorzugsweise wird das Filterelement beim Einbringen in den Kapselkörper gespannt. Weiterhin bevorzugt werden die Siegelnähte im Bodenbereich und im Randbereich bzw. an der Seitenwand des Kapselkörpers sequentiell angebracht. Vorzugsweise werden beide Siegelnähte mit einer Sonotrode gefertigt, wobei die Sonotrode das Filterelement auch formen kann. Vorzugsweise durchdringt die Sonotrode die Ausnehmung 24 des Filterelements zumindest teilweise.

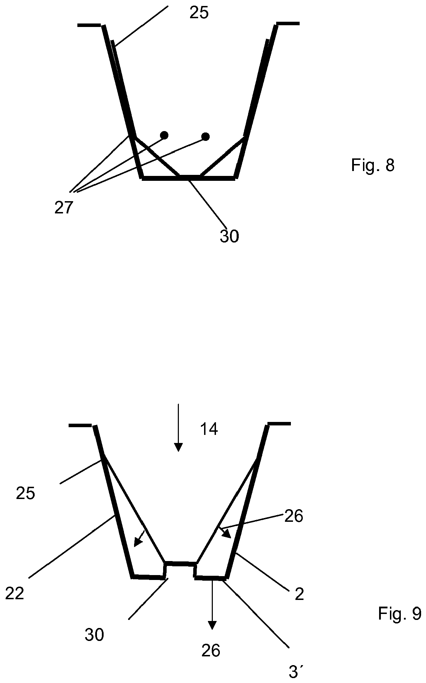

**Figur 8** zeigt noch eine Ausführungsform der erfindungsgemäßen Portionskapsel. In dem vorliegenden Fall ist das Filterelement zwischen den beiden Siegelungen 25, 30 noch durch Heftpunkte 27 mit dem Kapselkörper verbunden. Diese Heftungen haben den Vorteil, dass das Filterelement in einer ganz bestimmten Form stabilisiert werden kann, dass aber dennoch die Filterfläche mit oberhalb der Heftung an dem Filtervorgang teilnehmen kann. Bei dieser Ausführungsform der Portionskapsel ist die Siegelung 30 optional. Das Filterelement 7 kann wahlweise die Ausnehmung 24 aufweisen.

**Figur 9** zeigt noch eine Ausführungsform der erfindungsgemäßen Portionskapsel. In diesem Fall weist der Bodenbereich eine Ausbuchtung auf. Das Filterelement kann mit oder ohne Ausschnitt mit dem Umfang und/oder mit der Oberfläche verbunden werden, insbesondere durch Schweißen oder Siegeln. Die Oberfläche kann plan oder gewölbt ausgeführt werden.

Bei allen Ausführungsbeispielen kann die Kapsel durch Anstechen, insbesondere durch Anstechen des Bodenbereichs, geöffnet werden. Es ist aber auch denkbar, dass die Portionskapsel, insbesondere deren Bodenbereich, ab Werk vorperforiert ist, wobei diese vorperforierten Löcher vorzugsweise mit einer aromadichten Folie verschlossen sind, die vor Gebrauch der Portionskapsel entfernt wird.

### Bezugszeichenliste

- 1: Portionskapsel
- 2: Kapselkörper
- 3: Kapselboden
- 3a: Kapselboden-Innenseite
- 3': Randbereich des Kapselbodens
- 4: Einfüllseite
- 5: Kragenrand
- 6: Deckel, Deckelfolie
- 7: Filterelement
- 7': Randbereich des Filterelements
- 7": Zentralbereich des Filterelements
- 7'": Seitenwand des Filterelements
- 7"": Befestigungsfläche, Bördelrand
- 8: Brühkammer
- 9: Erstes Brühkammerelement
- 10: Zweites Brühkammerelement
- 11: Dichtung
- 12: Schließkolben
- 13a: Einstechelement
- 13b: Einstechelement
- 14: Zubereitungsflüssigkeitszufuhr
- 15: Brühglocke
- 16: Öffnungsdorn
- 17: Auslaufrillen
- 18: Ablauf
- 19: Einstechspitze
- 20: Einbuchtung
- 21: Ein-/Ausbuchtung
- 22: Seitenwand
- 23: Brühglockenboden
- 24: Ausnehmung
- 25: erster Befestigungsring, erster Siegelring, erste Siegelung
- 26: fertiggestelltes Getränk
- 27: Heftung
- 28: erstes Ende des Filters
- 29: zweites Ende des Filters
- 30: zweiter Befestigungsring, zweiter Siegelring, zweite Siegelung
- 31: Bördelung
- 100: Hohlraum
- 101: Getränkesubstrat
- 106: Zentraler Punkt
- 107: Öffnung, Ausgangsöffnung

## Patentansprüche

1. Portionskapsel (1) zur Herstellung eines Getränks aufweisend einen Kapselkörper (2) mit einem Kapselboden (3), einer Seitenwand (22) und einem Kragenrand (5) sowie einem Deckel (6), wobei zwischen dem Kapselboden (3) und dem Deckel (6) ein Hohlraum (100) zur Aufnahme eines pulverförmigen Granulat-förmigen oder flüssigen Getränkesubstrats (101) ausgebildet ist und wobei in dem Hohlraum ein aus Fasern hergestelltes Filterelement (7) angeordnet ist, wobei das Filterelement eine Ausnehmung (24) aufweist, in der kein filterndes Material vorgesehen ist, **dadurch gekennzeichnet, dass** ein Ende (29) des Filterelements gebördelt ist.

2. Portionskapsel (1) nach Anspruch 1, **dadurch gekennzeichnet, dass** das Filterelement an den Kapselkörper geheftet ist.

3. Portionskapsel (1) nach Anspruch 1 oder 2, **dadurch gekennzeichnet, dass** geformt oder tiefgezogen ist.

4. Portionskapsel (1) nach Anspruch 3, **dadurch gekennzeichnet, dass** das Filterelement ein erstes Ende (28) und ein zweites Ende (29) aufweist.

5. Portionskapsel (1) nach Anspruch 4, **dadurch gekennzeichnet**, beide Enden (28, 29) jeweils mit dem Kapselkörper verbunden sind.

6. Portionskapsel (1) nach Anspruch 5, **dadurch gekennzeichnet, dass** beide Enden mit einer kreisringförmigen Siegelung (30) mit dem Kapselkörper verbunden sind.

7. Portionskapsel (1) nach einem der voranstehenden Ansprüche, **dadurch gekennzeichnet, dass** das Filterelement im Bereich der Bördelung (31) gesiegelt ist.

8. Portionskapsel (1) nach einem der voranstehenden Ansprüche, **dadurch gekennzeichnet, dass** das Filtermaterial gespannt ist.

9. Portionskapsel (1) nach einem der voranstehenden Ansprüche, **dadurch gekennzeichnet, dass** das Filterelement einen hohlkegelförmigen Abschnitt aufweist

10. Verfahren zur Herstellung einer Portionskapsel nach einem der voranstehenden Ansprüche, **dadurch gekennzeichnet, dass** das Filtermaterial geformt und das erste Ende (28) und das zweite Ende (29) mit dem Kapselkörper verbunden wird, wobei ein Ende (29) gebördelt wird.

11. Verfahren nach Anspruch 10, **dadurch gekennzeichnet, dass** das Filtermaterial gerollt und/oder gefaltet wird.

12. Verfahren nach einem der Ansprüche 10 oder 11, **dadurch gekennzeichnet, dass** die Bördelung (31) mit dem Kapselboden verbunden wird.

13. Verfahren nach einem der Ansprüche 10 - 12, **dadurch gekennzeichnet, dass** das erste Ende (28) mit der Seitenwand und/oder mit dem Kragenrand des Kapselkörpers verbunden wird.

14. Verfahren nach einem der Ansprüche 10 - 13, **dadurch gekennzeichnet, dass** das Filterelement beim Befestigen an dem Kapselkörper gespannt wird.

15. Verfahren, nach einem der Ansprüche 10 - 14, **dadurch gekennzeichnet, dass** das Anordnen der Siegelnähte (30) sequentiell erfolgt.

## Claims

1. Portion capsule (1) for the production of a beverage, having a capsule body (2) having a capsule base (3), a side wall (22) and a collared periphery (5) and a lid (6), wherein a cavity (100) for receiving a pulverulent granulate or liquid beverage substrate (101) is configured between the capsule base (3) and the lid (6), and wherein a filter element (7) that is produced from fibers is disposed in the cavity, wherein the filter element has a cut-out (24) in which no filtering material is provided, **characterized in that** one end (29) of the filter element is flared.

2. Portion capsule (1) according to Claim 1, **characterized in that** the filter element is tack-welded to the capsule body.

3. Portion capsule (1) according to Claim 1 or 2, **characterized in that** the filter element is formed or vacuum-formed.

4. Portion capsule (1) according to Claim 3, **characterized in that** the filter element has a first end (28) and a second end (29).

5. Portion capsule (1) according to Claim 3, **characterized in that** both ends (28, 29) are in each case connected to the capsule body.

6. Portion capsule (1) according to Claim 5, **characterized in that** both ends are connected to the capsule body by way of an annular seal (30).

7. Portion capsule (1) according to one of the preceding claims, **characterized in that** the filter element is sealed in the region of the flared feature (31).

8. Portion capsule (1) according to one of the preceding claims, **characterized in that** the filter material is tensioned.

9. Portion capsule (1) according to one of the preceding claims, **characterized in that** the filter element has a portion in the shape of a hollow cone.

10. Method for the production of a portion capsule according to one of the preceding claims, **characterized in that** the filter material is formed and the first end (28) and the second end (29) are connected to the capsule body, wherein one end (29) is flared.

11. Method according to Claim 10, **characterized in that** the filter material is rolled and/or folded.

12. Method according to either of Claims 10 and 11, **characterized in that** the flared feature (31) is connected to the capsule base.

13. Method according to one of Claims 10-12, **characterized in that** the first end (28) is connected to the side wall and/or to the collared periphery of the capsule body.

14. Method according to one of Claims 10-13, **characterized in that** the filter element when being fastened to the capsule body is tensioned.

15. Method according to one of Claims 10-14, **characterized in that** the sealing seams (30) are disposed in a sequential manner.

## Revendications

1. Capsule (1) pour la préparation d'une boisson présentant un corps de capsule (2) avec un fond de capsule (3), une paroi latérale (22) et un bord de collet (5) ainsi qu'un couvercle (6), dans laquelle un espace creux (100) est formé entre le fond de capsule (3) et le couvercle (6) afin de contenir un substrat de boisson en forme de granulat pulvérulent ou liquide (101) et dans laquelle un élément filtrant (7) fabriqué à partir de fibres est disposé dans l'espace creux, dans laquelle l'élément filtrant présente un évidement (24), dans lequel il n'est pas prévu de matière filtrante, **caractérisée en ce qu'**une extrémité (29) de l'élément filtrant est sertie.

2. Capsule (1) selon la revendication 1, **caractérisée en ce que** l'élément filtrant est agrafé au corps de capsule.

3. Capsule (1) selon une revendication 1 ou 2, **caractérisée en ce que** est l'élément filtrant moulée ou emboutie.

4. Capsule (1) selon la revendication 3, **caractérisée en ce que** l'élément filtrant présente une première extrémité (28) et une seconde extrémité (29).

5. Capsule (1) selon la revendication 4, **caractérisée en ce que** les deux extrémités (28, 29) sont assemblées chacune au corps de capsule.

6. Capsule (1) selon la revendication 5, **caractérisée en ce que** les deux extrémités sont assemblées au corps de capsule avec un scellage annulaire circulaire (30).

7. Capsule (1) selon l'une quelconque des revendications précédentes, **caractérisée en ce que** l'élément filtrant est scellé dans la région du sertissage (31).

8. Capsule (1) selon l'une quelconque des revendications précédentes, **caractérisée en ce que** l'élément filtrant est serré.

9. Capsule (1) selon l'une quelconque des revendications précédentes, **caractérisée en ce que** l'élément filtrant présente une partie conique creuse.

10. Procédé de fabrication d'une capsule selon l'une quelconque des revendications précédentes, **caractérisé en ce que** l'on moule l'élément filtrant et on assemble la première extrémité (28) et la seconde extrémité (29) au corps de capsule, dans lequel on sertit une extrémité (29).

11. Procédé selon la revendication 10, **caractérisé en ce que** l'on enroule et/ou on plie l'élément filtrant.

12. Procédé selon une des revendications 10 ou 11, **caractérisé en ce que** l'on assemble le sertissage (31) au fond de capsule.

13. Procédé selon l'une quelconque des revendications 10 à 12, **caractérisé en ce que** l'on assemble la première extrémité (28) à la paroi latérale et/ou au bord de collet du corps de capsule.

14. Procédé selon l'une quelconque des revendications 10 à 13, **caractérisé en ce que** l'on serre l'élément filtrant lors de la fixation au corps de capsule.

15. Procédé selon l'une quelconque des revendications 10 à 14, **caractérisé en ce que** l'on effectue l'agencement des cordons de scellage (30) de façon séquentielle.
